# EUROPÄISCHE PATENTSCHRIFT

(11) **EP 0 232 878 B1**
(45) Veröffentlichungstag und Bekanntmachung des Hinweises auf die Patenterteilung: **16.06.1993**
(21) Anmeldenummer: 87101729.9
(22) Anmeldetag: 09.02.1987
(51) Int. Cl.: C08L 77/00, C08L 23/08, C08L 25/02, C08L 25/18, C08L 33/00, C08L 35/00

(54) **Thermoplastische Formmassen auf der Basis von Polyamiden und Styrolpolymeren**
Thermoplastic moulding compounds on the basis of polyamides and of styrene polymers
Masses à mouler thermoplastiques à base de polyamides et de polymères styréniques

(30) Priorität: 12.02.1986 DE 3604348
(43) Veröffentlichungstag der Anmeldung: 19.08.1987
(73) Patentinhaber: BASF Aktiengesellschaft, 67063 Ludwigshafen (DE)
(72) Erfinder: Taubitz, Christof, Dr., D-6706 Wachenheim (DE); Seiler, Erhard, Dr., D-6700 Ludwigshafen (DE); Hambrecht, Jürgen, Dr., D-4400 MÜnster-Hiltrup (DE)

(56) Entgegenhaltungen:
- EP-A- 0 000 583
- GB-A- 1 440 030
- JP-A- 5 927 940
- US-A- 4 174 358
- PATENT ABSTRACTS OF JAPAN Band 10, Nr.377(C-392)(2434), 16.Dezember 1986; &JP-A-61171751
- PATENT ABSTRACTS OF JAPAN Band 9, Nr 293(C-315)(2016).20.November 1985; &JP-A-60137961

## Beschreibung

Die Erfindung betrifft ein verbessertes Verfahren zur Herstellung von thermoplastischen Formmassen aus modifizierten Polyamiden und Styrolcopolymeren.

Polymermischungen aus Polystyrol und Polyamiden sind beispielsweise aus den US-A 3 243 478 und 3 243 479 bekannt. Bedingt durch die schlechte Verträglichkeit der beiden Polymere besitzen Formkörper aus den Polymermischungen ("Blends") schlechte mechanische Eigenschaften, insbesondere treten schichtweise Spaltungen auf (Delaminierungen).

In der DE-A 22 45 957 werden Mischungen aus Polyamiden und Copolymeren aus Ethylen und polymerisierbaren Carbonsäuren, Estern oder Anhydriden beschrieben. Diese Mischungen werden extrudiert, wobei es zu einer chemischen Reaktion zwischen den Säure- bzw. Säurederivatgruppen und den Amin- bzw. Amidgruppen des Polyamids kommt. Derartige Produkte sind sehr gut als Haftvermittler für Polyethylenpolymere geeignet. Weiterhin werden in dieser Druckschrift Mischungen aus Polyamiden und Styrolcopolymeren mit polymerisierbaren Carbonsäuren beschrieben. Nach analoger Verarbeitung wie vorstehend beschrieben, sind die Produkte gut als Haftvermittler für Polystyrol geeignet.

In der DE-A 30 37 520 werden Copolymere in denen Polymerketteneinheiten, abgeleitet von Polyamiden und Styrol-Copolymeren kovalent miteinander verknüpft sind, beschrieben.

Wenn auch die in der DE-A 30 37 520 und in der DE-A 22 45 957 beschriebenen Formkörper nur eine geringe Delaminierung zeigen, so sind doch die mechanischen Eigenschaften, insbesondere bei schlagartiger Belastung nicht zufriedenstellend.

In der GB-A 998 439 sind schlagfeste Polyamide beschrieben, deren Schlagzähigkeit durch ein carboxylgruppenhaltiges Ethylen-Copolymer verbessert wird.

Aus der JP-A 60/137 961 und JP-A 59/27 940 sind Mischungen aus unmodifiziertem Polyamid und Styrolco- bzw. -pfropfpolymeren bekannt. Diese Mischungen sind hinsichtlich der Schlagzähigkeit insbesondere der multiaxialen Schlagzähigkeit verbesserungswürdig.

Aufgabe der vorliegenden Erfindung war es, ein Verfahren zur Herstellung von thermoplastischen Formmassen zur Verfügung zu stellen, die die guten Eigenschaften sowohl von Polystyrol als auch von Polyamiden aufweisen und sich bei guten mechanischen Eigenschaften besonders durch eine hohe Schlagzähigkeit (auch mehraxial) auszeichnen.

Demgemäß wurde ein Verfahren zur Herstellung von thermoplastischen Formmassen aus modifizierten Polyamiden und Styrolcopolymeren gefunden, welches dadurch gekennzeichnet ist, daß man
2 - 98 Gew.-% eines modifizierten Polyamids A) aus
A₁) mindestens 50 Gew.-% eines Polyamids und
A₂) mindestens 0,1 Gew.-% eines Polymerisats aus
   a₁) 50 - 99 Gew.-% Ethylen,
   a₂) 1 - 50 Gew.-% einer polymerisierbaren Carbonsäure und/oder deren funktionellen Derivaten, gebildet aus der Gruppe der Anhydride, Imide, Amide, Ester, Alkali- oder Erdalkalisalze,
   a₃) 0 - 40 Gew.-% weiteren Monomeren
herstellt und das so erhaltene Produkt mit 2 - 98 Gew.-% eines Styrolcopolymeren B) mischt, welches Carbonsäuregrupen und/oder deren funktionelle Derivate, gebildet aus der Gruppe der Anhydride, Imide, Amide, Ester, Alkali- oder Erdalkalisalze, enthält, und bis zu 37 Gew.-%, bezogen auf den Anteil der Styrol-Monomeren, an weiteren Monomeren enthalten kann.

Weitere Ausführungsformen sind den Unteransprüchen zu entnehmen.

Das Verfahren zeichnet sich dadurch aus, daß thermoplastische Formmassen mit insgesamt guten mechanischen Eigenschaften, insbesondere guter Schlagzähigkeit und Lösungsmittelresistenz, zur Verfügung gestellt werden. Hinsichtlich der Widerstandsfähigkeit gegen Chemikalien, Wärme und Abrieb sind sie den Styrolpolymeren weit überlegen, während im Vergleich zu den Polyamiden die Formschrumpfung deutlich verringert ist.

Als Komponente A) enthalten die nach dem erfindungsgemäßen Verfahren erhältlichen Formmassen ein modifiziertes Polyamid, welches hergestellt wird aus mindestens 50 Gew.-% eines Polyamids (A₁) und mindestens 0,1 Gew.-% eines Polymerisats aus im wesentlichen Ethylen und polymerisierbaren Carbonsäuren und/oder deren funktionellen Derivaten (A₂). Bevorzugt beträgt der Anteil des Polyamids 55 - 98, besonders bevorzugt 87 - 95 Gew.-% und der des Copolymeren 2 - 45, besonders bevorzugt 5 - 25 Gew.-%.

Als Komponente A₁) werden Polyamide mit einem Molekulargewicht von 5 000-60 000, insbesondere von 10 000-40 000 bevorzugt. Als Beispiele seien genannt Polyamide, die sich von Lactamen mit 7 bis 13 Ringgliedern ableiten, wie Polycaprolactam, Polycapryllactam oder Polylaurinlactam sowie Polyamide, die durch Umsetzung von Dicarbonsäuren mit Diaminen erhalten werden. Geeignete Dicarbonsäuren, die auch in beliebigen Kombinationen einsetzbar sind, sind beispielsweise Alkandicarbonsäuren mit 6 bis 12, insbesondere 6 bis 10 Kohlenstoffatomen, Terephthalsäure und Isophthalsäure. Geeignete Diamine, die auch in beliebigen Kombinationen einsetzbar sind, sind beispielsweise Alkandiamine mit 6 bis 12, insbesondere 6 bis 8 Kohlenstoffatomen, ferner x-Xylylendiamin, Bis-(4-aminophenyl)methan, Bis(4-aminocyclohexyl)methan oder 2,2-Di(4-aminophenylpropan). Es ist auch möglich und manchmal vorteilhaft, Mischungen von Polyamiden zu verwenden. Besondere technische Bedeutung haben Polycaprolactam, Polyhexamethylenadipinsäureamid sowie Polyamide, die aus Hexamethylendiamin und Iso- oder Terephthalsäure aufgebaut sind, erlangt.

Als Komponente A₂) enthalten die modifizierten Polyamide ein Polymerisat aus im wesentlichen Ethylen, welches mindestens eine Carbonsäuregruppe oder eine Gruppe eines funktionellen Derivats einer polymerisierbaren Carbonsäure enthält. Als funktionelle Derivate seien beispielsweise Anhydride, Imide, Amide, Ester und Alkali- bzw. Erdalkalimetallsalze von Carbonsäuren genannt. Vorzugsweise ist das Polymerisat A₂) aufgebaut aus
a₁) 50-99 Gew.-% Ethylen
a₂) 1-50 Gew-% einer polymerisierbaren Carbonsäure und/oder deren funktionellen Derivaten
a₃) 0-40 Gew.-% weiteren Monomeren.

Zur Herstellung des Polymerisats A₂) kann das Ethylen mit den anderen Monomeren copolymerisiert werden; die Carbonsäure- bzw. Carbonsäurederivatgruppen können aber z.B. auch durch Pfropfung in ein Ethylenpolymer eingeführt werden.

Als Monomere a₂) seien beispielsweise alpha-beta-ungesättigte Carbonsäuren und Dicarbonsäuren, insbesondere mit 3-8 C-Atomen und deren funktionelle Derivate, insbesondere Anhydride, Imide, Amide, Ester und Salze genannt. Hier sind z.B. Acrylsäure, Methacrylsäure, Fumarsäure, Itaconsäure, Maleinsäureanhydrid, Methylmaleinsäureanhydrid, Chlormaleinsäureanhydrid, Itaconsäureanhydrid, Butenylbernsteinsäureanhydrid, Tetrahydrophthalsäureanhydrid, deren Salze, N-Phenyl-imide und Halbester und Ester von Alkoholen mit 1-29 C-Atomen und Amide der vorstehenden Säuren zu nennen.

Acrylsäure, Methacrylsäure und deren Ester mit 3-29 C-Atomen, wie z.B. n-Propylacrylat, i-Propylacrylat, n-Butylacrylat, i-Butylacrylat, 2-Ethylhexylacrylat sowie Maleinsäureanhydrid werden besonders bevorzugt. Diese Monomeren können auch als Mischungen eingesetzt werden, so daß man z.B. Ethylen/n-Butylacrylat/Methacrylat, Ethylen/-n-Butylacrylat/Maleinsäureanhydrid, Ethylen/2-Ethylhexylacrylat/(Meth)acrylsäure und Ethylen/2-Ethylhexylacrylat/Maleinsäureanhydrid-Polymere erhält.

(Meth)acrylsäurehaltige Polymere enthalten bevorzugt
a₁) 50-98 Gew.-% Ethylen
a₂) 2- 7 Gew.-% (Meth)acrylsäure
   0-42 Gew.-% n-Butyl oder 2-Ethylhexylacrylat,
während Maleinsäureanhydrid enthaltende Polymere bevorzugt aufgebaut sind aus
a₁) 50-99,9 Gew.-% Ethylen
a₂) 0,1-10 Gew.-% Maleinsäureanhydrid
   0-49 Gew.-% n-Butyl oder 2-Ethylhexylacrylat.

Als Monomere a₃) können gegebenenfalls alpha-Olefine mit 3 oder mehr C-Atomen, z.B. Propen, Buten-1, Penten-1, Hexen-1, Decen-1, und Vinylacetat eingesetzt werden. Der Anteil beträgt bis zu 40 Gew.-%, bezogen auf die Summe der Komponenten a₁) + a₂) + a₃).

Copolymerisationsverfahren zur Herstellung der vorstehend beschriebenen Copolymere sind an sich bekannt. Üblicherweise erfolgt die Polymerisation bei erhöhter Temperatur unter hohem Ethylendruck.

Eine weitere Möglichkeit zur Herstellung der Komponente A₂) liegt darin, carboxylgruppenfreie Ethylenpolymere, die gegebenenfalls bis zu 40 Gew.-% der vorstehend genannten alpha-Olefine mit mehr als 3 C-Atomen enthalten, in an sich bekannter Weise mit Carboxyl- oder Carboxylderivatgruppen enthaltenden Monomeren zu pfropfen, vorzugsweise unter Verwendung von Peroxiden. Als Pfropfmonomere sind beispielsweise Acrylsäure, Methacrylsäure, Maleinsäureanhydrid oder die entsprechenden Ester geeignet. Es ist auch möglich, Ethylen/(Meth)acrylat-Copolymere mit den vorgenannten Monomeren zu pfropfen, d.h. Copolymerisation und Pfropfung zu kombinieren. Bevorzugte Beispiele sind Ethylenpolymere auf die 0,1-1,5 Gew.-% Maleinsäureanhydrid oder 0,5-8 Gew.-% (Meth)acrylsäure aufgepfropft sind oder Ethylen/Butylacrylat-Copolymere (60-80 Gew.-% Ethylen, 20-40 Gew.-% Butylacrylat) auf welche 0,1-1,5 Gew.-% Maleinsäureanhydrid aufgepfropft sind.

Verfahren zur Herstellung solcher Pfropfpolymere sind an sich bekannt; beispielsweise können die Bestandteile bei Temperaturen von 150-300°C, vorzugsweise unter Zusatz von Peroxiden wie z.B. Diisopropylperoxid oder Dicumylperoxid im Extruder gemischt werden.

Polymere A₂) mit einer Glasübergangstemperatur unterhalb von 0°C, vorzugsweise unter -20°C werden bevorzugt. Diese sind im allgemeinen hochmolekular und weisen einen Schmelzindex von 1 bis 80 g/10 min (nach DIN 53 735 bei 190°C und 2,16 kg Belastung) auf.

Zur Herstellung des modifizierten Polyamids A) werden die Komponenten im allgemeinen in einem Mischer oder Extruder bei Temperatur im Bereich von 180-310°C, vorzugsweise von 220-280°C und Verweilzeiten von 0,5-15, vorzugsweise 1-10 Minuten gemischt. Dabei tritt in der Regel zumindest eine teilweise Umsetzung der Komponenten A₁) und A₂) miteinander ein.

Der Anteil des modifizierten Polyamids an den nach dem erfindungsgemäßen Verfahren erhältlichen Formmassen liegt im Bereich von 2 - 98, vorzugsweise von 20 - 80 Gew.-%, besonders bevorzugt von 25 - 75 Gew.-%.

Als Komponente B) enthalten die nach dem erfindungsgemäßen Verfahren erhältlichen thermoplastischen Formmassen ein Styrolcopolymeres, welches Carbonsäuregruppen und/oder deren funktionelle Derivate, gebildet aus der Gruppe der Anhydride, Imide, Amide, Ester, Alkali- oder Erdalkalisalze, enthält. Als Styrol-Monomer B₁) werden Styrol, alpha-Methylstyrol, o-, m-, p-Methylstyrol, Ethylstyrol und Chlorstyrol, d.h. ganz allgemein im aromatischen Ring oder in alpha-Stellung alkylierte (bevorzugt mit C₁-C₄-Alkylgruppen) oder halogenierte (bevorzugt chlorierte) Styrolderivate eingesetzt. Der Anteil des Styrol-Monomeren B₁) beträgt vorzugsweise 50 - 99 Gew.-% der Komponente B).

Neben den Styrol-Monomeren können noch bis zu 37 Gew.-%, bezogen auf den Anteil des Styrol-Monomeren an weiteren Monomeren, wie z.B. Acrylnitril und/oder Methacrylnitril enthalten sein. Selbstverständlich können auch Mischungen der Styrol-Monomere eingesetzt werden.

Zur Einführung der Carbonsäure- bzw. Carbonsäurederivatgruppen können ganz allgemein die bei der Komponente A₂) beschriebenen Säuren- und Säurederivate verwendet werden, worauf hier verwiesen wird. Der Anteil dieser Verbindungen beträgt vorzugsweise 1-50 Gew.-% der Komponente B).

Besonders bevorzugt werden Styrolcopolymere B) mit
B₁) 60 - 95 Gew.-% Styrol
B₂) 5 - 15 Gew.-% Maleinsäureanhydrid
   0 - 25 Gew.-% Methylmethacrylat
oder
B₁) 60 - 95 Gew.-% Styrol
B₂) 5 - 20 Gew.-% (Meth)acrylsäure
   0 - 25 Gew.-% (Meth)acrylat.

Die Styrolcopolymeren B) können in an sich bekannter Weise durch kontinuierliche, thermische oder radikalische Polymerisation der Monomeren, beispielsweise bei Temperaturen von 120-160°C und Verweilzeiten von 2 - 8 Stunden hergestellt werden.

Die Viskositätszahl der Styrolcopolymeren B) liegt vorzugsweise im Bereich von 20 - 120 cm³/g, insbesondere von 50 - 90 cm³/g (gemessen nach DIN 53 726/8 in 0,5% Lösung in DMF bei 25°C mit einem Ubbelohde-Viskosimeter), was einem mittleren Molekulargewicht (Zahlenmittel des Molekulargewichts) von 5000 bis 500 000, vorzugsweise von 20 000 bis 200 000 entspricht.

Der Anteil der Styrolcopolymeren an den Formmassen beträgt 2 - 98, vorzugsweise 20 - 80 und besonders bevorzugt 25 - 75 Gew.-%, bezogen auf das Gesamtgewicht der Formmassen.

Zusätzlich zu den Komponenten A) und B) können in den Formmassen noch Zusatzstoffe und Verarbeitungshilfsmittel enthalten sein, wie sie üblich sind. Hier sind z.B. Stabilisatoren, Flammschutzmittel, Gleit- und Entformungsmittel und Füllstoffe zu nennen. Auch niedermolekulare und hochmolekulare Polymere können zugesetzt werden, z.B. Polystyrol, Styrol-Acrylnitril-Copolymere, Polyester, Polycarbonate, aliphatische und aromatische Dien-Öle oder Wachse.

Die Herstellung der erfindungsgemäßen Formmassen kann in an sich bekannter Weise durch Mischen der Einzelkomponenten A) und B) bei 250 - 320°C in Knetern, Banbury-Mischern oder Extrudern (vorzugsweise Zweischneckenextrudern) erfolgen. Durch intensive Durchmischung der Komponenten ist eine Verbesserung der Homogenität der Formmassen zu erreichen.

Die nach dem erfindungsgemäßen Verfahren erhältlichen Formmassen zeichnen sich durch eine sehr gute Schlagzähigkeit und eine gegenüber den Polyamiden stark verminderte Formschrumpfung und verminderte Wasseraufnahme aus. Daher eignen sie sich besonders zur Herstellung von Formmassen mit besonders guter Dimensionsstabilität. Sie können z.B. durch Blasverformen und Extrudieren zu Rohren, Tafeln, Flaschen und Beschichtungen sowie bei Verstärkung mit Glasfasern besonders zu großflächigen Teilen verarbeitet werden.

### Beispiele 1 - 16

In den folgenden Beispielen wurden die nachstehend aufgeführten Ausgangskomponenten verwendet. Der Schmelzindex wurde nach DIN 53 735 bei 190°C und 2,16 kg Belastung, die Viskositätszahl nach DIN 53 726/8 bei 25°C an einer 0,5%igen Lösung in Dimethylformamid bei 25°C mit einem Ubbelohde-Viskosimeter bestimmt.
- A₁/1: Polycaprolactam mit Mₙ = 18 000 (Mₙ = Zahlenmittel des Molekulargewichts)
- A₁/2: Polyhexamethylenadipinsäureamid mit Mₙ = 19 000
- A₂/1: Ethylencopolymer aus 95 Gew.-% Ethylen und 5 Gew.-% Acrylsäure mit einem Schmelzindex (MFI) von 13 g/10 min (DIN 53 735)
- A₂/2: Ethylencopolymer aus 64 Gew.-% Ethylen und 35 Gew.-% 2-Ethylhexylacrylat und 1 Gew.-% Maleinsäureanhydrid mit einem Schmelzindex (MFI) von 27 g/10 min.
- A₂/3: Ethylenpolymer aus 63 Gew.-% Ethylen und 32 Gew.-% n-Butylacrylat und 5 Gew.-% Acrylsäure mit einem Schmelzindex (MFI) von 26 g/10 min.
- A₂/4: Ethylencopolymer, gepfropft mit Maleinsäureanhydrid (MSA) mit einem MSA-Gehalt von 0,6 Gew.-%, mit einem Schmelzindex (MFI) von 10 g/ 10 min.
- B/1: Styrolpolymerisat aus 88 Gew.-% Styrol, 6 Gew.-% Methylmethacrylat und 6 Gew.-% Maleinsäureanhydrid mit einer Viskositätszahl (VZ) = 70
- B/2: Styrolpolymerisat aus 94 Gew.-% Styrol und 6 % Maleinsäureanhydrid mit einer Viskositätszahl (VZ) = 83
- B/3: Styrolpolymerisat aus 79,5 Gew.-% Styrol und 8 % Acrylnitril und 12,5 Gew.-% Maleinsäureanhydrid mit einer Viskositätszahl (VZ) = 75.

Die Polymeren wurden bei 280°C nach den Angaben in Tabelle 1 und 2 in einem Zweischneckenextruder abgemischt, wobei zuvor aus den Komponenten A₁) und A₂) das modifizierte Polyamid A) hergestellt wurde und das so erhaltene Produkt mit der Komponente B gemischt wurde.

Die Schlagzähigkeit und die Schädigungskraft wurden gemäß DIN 53 443, die Schlagzähigkeit gemäß DIN 53 453, die Izod-Kerbschlagzähigkeit gemäß ISO 180 und die Wärmeformbeständigkgiet VST (Vicat B) nach DIN 53 460 bestimmt.

**Tabelle 1**

| Zusammensetzung der Formmassen und Meßergebnisse (alle Mengenangaben in Gew.-%) der Beispiele 1 - 10 | | | | | | | | | | |
|---|---|---|---|---|---|---|---|---|---|---|
| Polymertyp | Beispiel Nr. | | | | | | | | | |
| | 1* | 2* | 3* | 4 | 5 | 6 | 7 | 8 | 9 | 10* |
| A₁/1 | 66 | 57 | 47 | 60 | 54 | 45 | 60 | | | |
| A₁/2 | | | | | | | | 47 | 54 | 60 |
| A₂/3 | | | | 6 | 6 | 5 | 6 | 9 | | |
| A₂/1 | | | | | | | | | 9 | |
| B/1 | | | | | | | | 44 | | |
| B/2 | 34 | 43 | 53 | 34 | 40 | 50 | | | | |
| B/3 | | | | | | | 34 | | 37 | 40 |
| Schädigungsarbeit, Nm | - | - | - | 15 | 7 | 5 | 23 | 10 | 13 | - |
| Schädigungskraft N | - | - | - | 3200 | 2100 | 1400 | 4400 | 2400 | 2800 | - |
| Schlagzähigkeit kJ/m² | 44 | 20 | 10 | k.Br.¹⁾ | 54 | 24 | k.Br. | 42 | 34 | 18 |
| Izod-Kerbschlagz. J/m | 5,5 | 3,1 | 2,1 | 15 | 4,7 | 5,0 | 10 | 10 | 9 | 2,7 |
| Wärmeformbe- | 165 | 135 | 122 | 140 | 123 | 114 | 142 | 125 | 128 | 139 |

| | | | | | | | | | | |
|---|---|---|---|---|---|---|---|---|---|---|
| * Vergleichsbeispiele | | | | | | | | | | |
| ¹⁾ Kein Bruch | | | | | | | | | | |

**Tabelle 2**

| Zusammensetzungen der Formmassen (alle Mengenangaben in Gew.-%) und Meßergebnisse der Beispiele 11 - 16 | | | | | | |
|---|---|---|---|---|---|---|
| Polymertyp | Beispiel Nr. | | | | | |
| | 11* | 12 | 13* | 14 | 15 | 16 |
| A₁/1 | 63 | 52 | | | | 55 |
| A₁/2 | | | 56 | 49 | 54 | |
| A₂/2 | | 17 | | | 5 | 12 |
| A₂/4 | | | | 10 | 6 | |
| | | | | 4 | | |
| B/2 | 37 | 31 | 44 | 37 | 27 | 33 |
| B/1 | | | | | 8 | |
| Schädigungsarbeit, Nm | - | 19 | - | 16 | 18 | 29 |
| Schädigungskraft N | - | 3700 | - | 3900 | 4100 | 5200 |
| Schlagzähigkeit kJ/m² | 31 | k.Br.¹⁾ | 14 | k.Br. | k.Br. | k.Br. |
| Izod-Kerbschlagz. J/m | 4,1 | 17 | 2,1 | 16 | 17 | 20 |
| Wärmeformbeständigkeit °C | 149 | 122 | 132 | 122 | 126 | 162 |

| | | | | | | |
|---|---|---|---|---|---|---|
| * Vergleichsbeispiel | | | | | | |
| ¹ Kein Bruch | | | | | | |

## Patentansprüche

1. Verfahren zur Herstellung von thermoplastischen Formmassen aus modifizierten Polyamiden und Styrolcopolymeren, dadurch gekennzeichnet, daß man
2 - 98 Gew.-% eines modifizierten Polyamids A) aus
A₁) mindestens 50 Gew.-% eines Polyamids und
A₂) mindestens 0,1 Gew.-% eines Polymerisats aus
a₁) 50 - 99 Gew.-% Ethylen,
a₂) 1 - 50 Gew.-% einer polymerisierbaren Carbonsäure und/oder deren funktionellen Derivaten, gebildet aus der Gruppe der Anhydride, Imide, Amide, Ester, Alkali- oder Erdalkalisalze,
a₃) 0 - 40 Gew.-% weiteren Monomeren
herstellt und das so erhaltene Produkt mit
2 - 98 Gew.-% eines Styrolcopolymeren B) mischt, welches Carbonsäuregruppen und/oder deren funktionelle Derivate, gebildet aus der Gruppe der Anhydride, Imide, Amide, Ester, Alkali- oder Erdalkalisalze, enthält, und bis zu 37 Gew.-%, bezogen auf den Anteil der Styrol-Monomeren, an weiteren Monomeren enthalten kann.

2. Verfahren nach Anspruch 1, dadurch gekennzeichnet, daß man
25 - 75 Gew.-% der Komponente A) und
25 - 75 Gew.-% der Komponente B)
mischt.

3. Verfahren nach den Ansprüchen 1 oder 2, dadurch gekennzeichnet, daß man ein Polymerisat A₂), aufgebaut aus einer Monomermischung enthaltend
a₁) 50 - 99 Gew.-% Ethylen,
a₂) 1 - 50 Gew.-% einer polymerisierbaren Alk-2-en-Carbonsäure und/oder deren funktionellen Derivaten,
a₃) 0 - 40 Gew.-% weiterer Monomerer,
einsetzt.

4. Verfahren nach den Ansprüchen 1 bis 3, dadurch gekennzeichnet, daß man ein modifiziertes Polyamid A) aus
55 - 98 Gew.-% der Komponente A₁) und
2 - 45 Gew.-% der Komponente A₂)
einsetzt.

5. Verfahren nach den Ansprüchen 1 bis 4, dadurch gekennzeichnet, daß man ein Styrolcopolymeres B), aufgebaut aus einer Monomermischung aus
B₁) 50 - 99 Gew.-% eines Styrol-Monomeren aus der Gruppe der im Ring oder in alpha-Stellung alkyl- oder halogensubstituierten Styrol-Derivate und/oder Styrol und
B₂) 1 - 50 Gew.-% einer polymerisierbaren Carbonsäure und/oder deren funktionellen Derivaten, gebildet aus der Gruppe der Anhydride, Imide, Amide, Ester, Alkali- oder Erdalkalisalze,
einsetzt.

6. Verfahren nach den Ansprüchen 1 bis 5, dadurch gekennzeichnet, daß man die erhaltenen thermoplastischen Formmassen in einer weiteren Stufe zu Formkörpern verarbeitet.

## Claims

1. A process for preparing thermoplastic molding materials from modified polyamides and styrene copolymers, which comprises preparing
2-98% by weight of modified polyamide A) from
A₁) at least 50% by weight of a polyamide and
A₂) at least 0.1% by weight of a polymer from
a₁) 50-99% by weight of ethylene,
a₂) 1-50% by weight of a polymerizable carboxylic acid and/or functional derivatives thereof selected from the group consisting of the anhydrides, imides, amides, esters, alkali metal salts and alkaline earth metal salts,
a₃) 0-40% by weight of further monomers
and mixing the resulting product with
2-98% by weight of styrene copolymer B) which contains carboxylic acid groups and/or functional derivatives thereof selected from the group consisting of the anhydrides, imides, amides, esters, alkali metal salts and alkaline earth metal salts, and may contain up to 37% by weight, based on the proportion of styrene monomers, or further monomers.

2. A process as claimed in claim 1, wherein
25-75% by weight of component A) and
25-75% by weight of component B)
are mixed.

3. A process as claimed in claim 1 or 2, wherein a polymer A₂) based on a monomer mixture containing
a₁) 50-99% by weight of ethylene
a₂) 1-50% by weight of a polymerizable alk-2-ene carboxylic acid or a functional derivative thereof, and
a₃) 0-40% by weight of further monomers
is used.

4. A process as claimed in any of claims 1 to 3, wherein a modified polyamide A) prepared from
55-98% by weight of component A₁) and
2-45% by weight of component A₂)
is used.

5. A process as claimed in any of claims 1 to 4, wherein a styrene copolymer B) based on a monomer mixture of
B₁) 50-99% by weight of a styrene monomer of the group of the styrene derivatives which are alkyl- or halogen-substituted in the ring or in the alpha-position and/or styrene and
B₂) 1-50% by weight of a polymerizable carboxylic acid and/or a functional derivative thereof selected from the group consisting of the anhydrides, imides, amides, esters, alkali metal salts and alkaline earth metal salts
is used.

6. A process as claimed in any of claims 1 to 5, wherein the thermoplastic molding materials obtained are processed in a further stage to give moldings.

## Revendications

1. Procédé de préparation de masses à mouler thermoplastiques à partir de polyamides modifiés et de copolymères de styrène, caractérisé en ce qu'on prépare
2 à 98% en poids d'un polyamide modifié A) à partir
A₁) d'au moins 50% en poids d'un polyamide et
A₂) d'au moins 0,1% en poids d'un polymère de
a₁) 50 à 99% en poids d'éthylène,
a₂) 1 à 50% en poids d'un acide carboxylique polymérisable et/ou de dérivés fonctionnels de celui-ci, compris dans le groupe des anhydrides, des imides, des amides, des esters ou des sels alcalins ou alcalino-terreux,
a₃) 0 à 40% en poids d'autres monomères,
et on mélange le produit ainsi obtenu avec
2 à 98% en poids d'un copolymère de styrène B) qui contient des groupements acide carboxylique et/ou des dérivés fonctionnels de ceux-ci, compris dans le groupe des anhydrides, des imides, des amides, des esters ou des sels alcalins ou alcalino-terreux, et qui peut contenir jusqu'à 37% en poids, par rapport à la part des monomères styréniques, d'autres monomères.

2. Procédé selon la revendication 1, caractérisé en ce qu'on mélange
25 à 75% en poids du composant A) et
25 à 75% en poids du composant B).

3. Procédé selon la revendication 1 ou 2, caractérisé en ce qu'on utilise un polymère A₂) constitué par un mélange de monomères contenant
a₁) 50 à 99% en poids d'éthylène,
a₂) 1 à 50% en poids d'un acide alcène-2-carboxylique et/ou de dérivés fonctionnels de celui-ci,
a₃) 0 à 40% en poids d'autres monomères.

4. Procédé selon l'une quelconque des revendications 1 à 3, caractérisé en ce qu'on utilise un polyamide modifié A) contenant
55 à 98% en poids du composant A₁) et
2 à 45% en poids du composant A₂).

5. Procédé selon l'une quelconque des revendications 1 à 4, caractérisé en ce qu'on utilise un copolymère de styrène B) constitué par un mélange de monomères contenant
B₁) 50 à 99% en poids d'un monomère styrénique du groupe des dérivés du styrène substitués sur le noyau ou en position α par un reste alkyle ou un atome d'halogène et/ou du styrène et
B₂) 1 à 50% en poids d'un acide carboxylique polymérisable et/ou de dérivés fonctionnels de celui-ci, compris dans le groupe des anhydrides, des imides, des amides, des esters ou des sels alcalins ou alcalino-terreux.

6. Procédé selon l'une quelconque des revendications 1 à 5, caractérisé en ce qu'en une étape ultérieure, on transforme les masses à mouler thermoplastiques obtenues en corps moulés.
